Europäisches Patentamt

European Patent Office

Office européen des brevets

(11) Veröffentlichungsnummer: **0 489 405 A2**

(12) **EUROPÄISCHE PATENTANMELDUNG**

(21) Anmeldenummer: **91120772.8**

(22) Anmeldetag: **03.12.91**

(30) Priorität: **05.12.90 DE 4038802**

(43) Veröffentlichungstag der Anmeldung:
**10.06.92 Patentblatt 92/24**

(84) Benannte Vertragsstaaten:
**DE ES FR GB IT**

(51) Int. Cl.⁵: **G05D 7/06**

(71) Anmelder: **Bosch-Siemens Hausgeräte GmbH
Patent- und Vertragswesen
Hochstrasse 17 Postfach 10 02 50
W-8000 München 80(DE)**

(72) Erfinder: **Graf, Richard, Dipl.-Ing.
Räuschstrasse 1
W-1000 Berlin 27(DE)**
Erfinder: **Koos, Dietrich, Dipl.-Ing.
Beverstedter Weg 4
W-1000 Berlin 33(DE)**
Erfinder: **Krüger, Manfred, Dipl.-Ing.
Bechstedter Weg 11
W-1000 Berlin 31(DE)**

(54) **Steuerung für ein elektrisches Hausgerät.**

㊷ Die Erfindung betrifft die Steuerung für ein elektrisches Hausgerät oder dgl. mit einem einen Mikrocomputer enthaltenden Schaltkreis, über den der Ablauf von Arbeitsprogrammen zum Betrieb des Hausgeräts eingeleitet und zusammen mit Betriebsparametern überwacht wird.

Es ist dabei üblich, die Menge zulaufenden Wassers über Niveauschalter zu erfassen. Um dabei mögliche Fehlereinflüsse, bedingt durch den Betriebszustand und die Aufstellposition des Hausgerätes, zu vermeiden, und um die Möglichkeiten für eine Steuerung von Programmabläufen zu verbessern, wird die zulaufende Wassermenge über einen an den Mikrocomputer angeschlossenen Mengenmesser erfaßt.

EP 0 489 405 A2

Die Erfindung bezieht sich auf eine Steuerung für ein elektrisches Hausgerät oder dgl. mit einem einen Mikrocomputer enthaltenden Schaltkreis, über den der Ablauf von Arbeitsprogrammen zum Betrieb des Hausgerätes eingeleitet und zusammen mit Betriebsparametern überwacht wird.

Bei herkömmlichen Steuerungen dieser Gattung wird die Menge zulaufenden Wassers über Niveauschalter erfaßt. Damit ist eine kontinuierliche Erfassung des zulaufenden Wassers ebenso wenig möglich wie ein Erfassen und damit auch Dosieren kleiner Wassermengen. Die Erfassung von Wasserständen über Niveauschalter ist weiterhin relativ ungenau. Dabei können sich Fehlereinflüsse, bedingt durch den jeweiligen Betriebszustand und die Aufstellposition des Hausgerätes, auf die erfaßte Wassermenge auswirken, was insgesamt zu Ungenauigkeiten beim Ablauf von Arbeitsprogrammen fuhren kann.

Der Erfindung liegt die Aufgabe zugrunde, eine genauere Erfassung des zulaufenden Wassers zu ermöglichen und damit Voraussetzungen für eine effektivere Steuerung des Ablaufs von Arbeitsprogrammen, sowie für eine Sicherheitsüberwachung zu schaffen.

Diese Aufgabe wird bei einer gattungsgemäßen Steuerung dadurch gelöst, daß die zulaufende Wassermenge über einen an den Mikrocomputer angeschlossenen Mengenmesser erfaßt wird.

Damit wird, beispielsweise unter Verwendung eines Durchlauf-Mengenmessers, in einfacher Weise eine genaue und kontinuierlich durchführbare Erfassung des zulaufenden Wassers ermöglicht.

In vorteilhafter Weise kann die zulaufende Wassermenge, unabhängig vom Betriebszustand des Hausgerätes einschließlich des jeweiligen Niveaus des Wassers, in dem Hausgerät erfaßt werden.

Fehlereinflüsse, bedingt durch den jeweiligen Betriebszustand des Hausgeräts, wie beispielsweise einer laufenden Umwälzpumpe bei Geschirrspülern oder einer rotierenden Trommel bei einer Waschmaschine, sind dabei vermieden. Dies gilt entsprechend hinsichtlich der Aufstellposition; eine etwaige Schrägstellung des Hausgeräts ist somit ohne Einfluß auf die Genauigkeit mit der die zulaufende Wassermenge ermittelt werden kann.

Es ist weiter von Vorteil, daß abhängig von der über den Mengenmesser ermittelten zugelaufenen Wassermenge, ein von einer Umwälzpumpe mit konstanter Betriebsdrehzahl erzeugter Wasserdruck, beispielsweise bei einem Geschirrspüler, mit ausreichender Genauigkeit einstellbar ist. Abhängig von einem ausgewählten Arbeitsprogramm kann somit in einfacher und sicherer Weise beispielsweise empfindliches oder wenig verschmutztes Geschirr mit geringem Wasserdruck bzw. einer geringen Wassermenge gespült werden.

In besonders vorteilhafter Weise können weiterhin, abhängig von für kontinuierlich zulaufendes Wasser erfaßten Werten, über den Mikrocomputer Betriebsvorgänge, wie das Einschalten einer Umwälzpumpe, einer Heizung, die Zugabe von Reinigungs- oder Spülmitteln oder ein Abschalten eines Wasserzulaufventils ausgelöst werden.

Damit ist in einfacher Weise eine genaue Steuerung des Ablaufs eines Arbeitsprogramms möglich. Durch das kontinuierliche Erfassen der zulaufenden Wassermenge kann ferner auch die Programmdauer verkürzt werden, denn Stillstandzeiten zum Erfassen des Wasserstandes über Niveauschalter sind im Gegensatz zu den herkömmlichen Steuerungen nicht erforderlich.

Aufgrund der kontinuierlichen Erfassung des zulaufenden Wassers können auch kleine Wassermengen genau erfaßt werden. Damit ist es beispielsweise möglich, daß die zum Regenerieren eines Ionenaustauschers für einen Wasserenthärter erforderliche Wassermenge über den Mengenmesser und den Mikrocomputer erfaßt werden. Es ist somit nicht erforderlich, daß ein Meßbehälter und mechanische Einstellhilfen eingesetzt werden.

Weiterhin kann in vorteilhafter Weise die Menge des über mehrere Programmabläufe einem Hausgerät zugeführten und über den Mengenmesser gemessenen Wassers in dem Mikrocomputer aufsummiert und gespeichert werden. Abhängig von der Wasserhärte können dann, ausgehend von dem Erreichen eines vorgegebenen Summenwertes, beispielsweise Regeneriervorgänge für einen Enthärter eingeleitet werden.

Mit Vorteil kann ferner, ausgehend von von dem Mengenmesser erfaßten Werten, über den Mikrocomputer eine Sicherheitsüberwachung betreffend den Ablauf eines Arbeitsprogrammes und/oder den Betriebszustand des Hausgerätes durchgeführt werden. Damit kann beispielsweise ein Wassermangel festgestellt und über eine Anzeigeeinrichtung optisch und akustisch angezeigt werden. So kann auch ein Wassermangel bei geöffnetem Magnetventil und geschlossenem Wasserhahn sofort und unabhängig von etwaig in dem Hausgerät noch enthaltenem Restwasser sowie einem etwaig in der Zulaufleitung noch vorhandenem Restdruck festgestellt werden. Dies ist beispielsweise bei druckabhängig wirkenden bekannten Kontrolleinrichtungen nicht der Fall.

Ferner kann beispielsweise ein fehlerhaft schließendes Magnetventil daran erkannt werden, daß auch in Programmabschnitten, in denen das Magnetventil geschlossen sein soll, eine zulaufende Wassermenge erfaßt wird.

Werden geringe zulaufende Wassermengen erfaßt, dann kann vorgesehen werden, daß das Hausgerät über den Mikrocomputer abgeschaltet wird. Damit kann in einfacher und sicherer Weise ein andernfalls mögliches Überlaufen von Wasser vermieden werden. Zusätzlich kann bei einem derartigen Zustand eine Abwasserpumpe über den Mikrocomputer eingeschaltet werden.

Für den erfindungsgemäß einzusetzenden Mengenmesser ist schließlich auch eine Funktions- bzw. Genauigkeitsprüfung, beispielsweise unter Verwendung von Testprogrammen und Vergleichsmengen sowohl während einer Herstellung von Hausgeräten, als auch während des späteren Einsatzes im Rahmen einer Wartung einfach durchführbar.

**Patentansprüche**

1. Steuerung für ein elektrisches Hausgerät oder dgl. mit einem einen Mikrocomputer enthaltenden Schaltkreis, über den der Ablauf von Arbeitsprogrammen zum Betrieb des Hausgerätes eingeleitet und zusammen mit Betriebsparametern überwacht wird, **dadurch gekennzeichnet,** daß die zulaufende Wassermenge über einen an den Mikrocomputer angeschlossenen Mengenmesser erfaßt wird.

2. Steuerung nach Anspruch 1, dadurch gekennzeichnet, daß die zulaufende Wassermenge unabhängig vom Betriebszustand des Hausgerätes einschließlich des jeweiligen Niveaus des Wassers in dem Hausgerät erfaßt wird.

3. Steuerung nach Anspruch 1 oder 2, dadurch gekennzeichnet, daß abhängig von der über den Mengenmesser ermittelten zugelaufenen Wassermenge ein von einer Umwälzpumpe mit konstanter Betriebsdrehzahl erzeugter Wasserdruck, beispielsweise bei einem Geschirrspüler, mit ausreichender Genauigkeit einstellbar ist.

4. Steuerung nach einem der Ansprüche 1 bis 3, dadurch gekennzeichnet, daß abhängig von für kontinuierlich zulaufendes Wasser erfaßten Werten über den Mikrocomputer Betriebsvorgänge, wie das Einschalten einer Umwälzpumpe, einer Heizung, die Zugabe von Reinigungs- oder Spülmitteln, oder ein Abschalten eines Wasserzulaufventils ausgelöst werden.

5. Steuerung nach einem der Ansprüche 1 bis 4, dadurch gekennzeichnet, daß abhängig von für kontinuierlich zulaufendes Wasser erfaßten Werten über den Mikrocomputer eine Sicherheitsüberwachung betreffend den Ablauf eines Arbeitsprogrammes und/oder den Betriebszustand des Hausgerätes durchgeführt wird.